# EUROPEAN PATENT APPLICATION

(11) **EP 4 156 858 A1**
(43) Date of publication of application: **29.03.2023**
(21) Application number: 21199341.5
(22) Date of filing: 28.09.2021
(51) Int. Cl.: H05B 3/22, A47J 27/00, H05B 1/02

(54) **CONTACT UNIT AND THICK FILM HEATER FOR INTEGRATION INTO A KITCHEN APPLIANCE BOWL**

(71) Applicant: BSH Hausgeräte GmbH, 81739 München (DE)
(72) Inventor: Cresnar, Mihael, 3205 Vitanje (SI); Golob, Jakob, 3330 Mozirje (SI); Rudez, Darko, 3230 Sentjur, Slowenien (SI)

(57) **Abstract**

Disclosed is a contact unit 10 for integration into a kitchen appliance bowl 100 with a thick film heater 20. The contact unit comprises an electric plug formed by two pins 5a, and a carrier 6 carrying at least one bimetal safety switch 1a, 1b, a wiring 2, electric contact elements 3a, 3b, a resistance temperature detector 4 and/or one or more elastic element/s e1a, e3a, e3b, e4. The carrier 6 is moulded around a respective section s5a of each pin 5a. Therein, a respective first end 5a' of each pin 5a protrudes from the carrier 6 in a first direction D₁, whereas at least the contact elements 3a, 3b and the resistance temperature detector 4 each are urged, by one or more elastic elements e3a, e3b, e4, in a second direction D₂ opposite to the first direction D₁.

Further disclosed are a base component 100 of a kitchen appliance bowl, a thick film heater 210, a kitchen appliance bowl 1000 and a kitchen appliance.

## Description

The present invention concerns a contact unit for integration into a kitchen appliance bowl, i.e., into a bowl of or for a kitchen appliance, the kitchen appliance bowl comprising a thick film heater. Moreover, the invention concerns a base component of a kitchen appliance bowl, the base component comprising a contact unit. The invention further concerns a thick film heater of a kitchen appliance bowl, a kitchen appliance bowl comprising said base component and said thick film heater, and a kitchen appliance comprising a socle component and said kitchen appliance bowl.

Kitchen appliances often comprise a bowl for preparing food therein. Such kitchen appliance bowl may be configured to electrically heat the ingredients respectively put into the bowl. To provide a space-saving, compact and highly efficient heater device, the bowl may be provided with a thick film heater. A contact unit may serve to connect such thick film heater to an electric power source.

The present invention targets at providing a technique facilitating an improved control of a heater element of a kitchen appliance.

The object is achieved by a contact unit according to claim 1, a base component according to claim 5, a thick film heater according to claim 7, a kitchen appliance bowl according to claim 8, and a kitchen appliance according to claim 10. Advantageous embodiments are disclosed in the dependent claims, the description and the figures.

A contact unit according to claim 1 is configured to be integrated into a kitchen appliance bowl (i.e., a bowl of a kitchen appliance) comprising a thick film heater. In particular, the contact unit may preferably be configured to be integrated into a base component of the kitchen appliance bowl.

The contact unit comprises an electric plug with two or more pins configured to be inserted in a respective socket for connection with an electric power source. For instance, such socket (not forming part of the contact unit) may be arranged in a socle component (of the kitchen appliance) the kitchen appliance bowl may be configured to combined with, in particular to be placed on.

The contact unit further comprises two electric contact elements for connection with respective contacts of the thick film heater, at least one bimetal safety switch, and a wiring connecting the at least one bimetal safety switch with the electric contact elements and the pins of the plug. As is to be understood, the wiring may comprise one or various electrically conductible components such as at least one cable and/or at least one pad.

Moreover, the contact unit according to the present invention comprises a resistance temperature detector, one or more elastic elements, and a carrier carrying (directly or with some element in-between) the at least one bimetal safety switch, the wiring, the contact elements, the resistance temperature detector and/or the one or more elastic element/s. Therein, the carrier is moulded around a respective section of each pin, and a respective first end of each pin protrudes from the carrier in a first direction, whereas the contact elements and the resistance temperature detector each are urged, by at least one of the one or more elastic element/s, in a second direction opposite to the first direction.

Accordingly, when the contact unit is integrated into a kitchen appliance bowl and properly combined therein with the thick film heater, the thick film heater may be connected with a socle of the kitchen appliance by means of the contact unit in-between. The thick film heater may thus be electrically powered through the plug, the wiring, the at least one bimetal safety switch and the contact elements.

Therein, by means of the at least one elastic element, the contact elements are preferably pressed against respective connection pads of the thick film heater, and the resistance temperature detector is pressed against a regulation spot (as a point of measurement) of the thick film heater, thus each providing a reliable connection being conveniently established by means of the elastic element/s. The contact unit thus facilitates both a simple and a reliable production of the kitchen appliance bowl. Moreover, by facilitating that the resistance temperature detector is pressed (directly or with a material such as a thermal paste in-between) against the thick film heater (at the regulation spot), in particular preferably against a substrate of the thick film heater, the contact unit provides for an advantageous regulation and, therewith, a precisely controllable cooking function of the kitchen appliance.

At least one of the electric contact elements may comprise a respective silver pad. Thereby, a particularly high electric conductibility between the contact unit and a thick film heater to be powered therewith can be achieved.

At least one of the one or more elastic elements may form part of the wiring (such as a metal leaf spring holding a respective one of the electric contact elements and electrically connecting it to further components of the wiring, such as to a cable). Additionally or alternatively, at least one of the one or more elastic elements may be electrically insulated from the wiring and/or at least partially be made of an electrically insulating material.

The one or more elastic element/s may include at least one elastic element urging both electric contact elements (in common) in the second direction, and/or urging both at least one of the electric contact elements and the resistance temperature detector in the second direction (in common). Additionally or alternatively, the one or more elastic element/s may include at least two elastic elements each urging a dedicated one of the electric contact elements in the second direction only. This is particularly advantageous if the elastic elements form part of the wiring. Similarly, the one or more elastic element/s may include at least one elastic element urging only the resistance temperature detector. In particular, each of the electric contact elements and the resistance temperature detector may be urged, in the second direction, (possibly only) by a dedicated (associated) respective one of the one or more elastic element/s.

The at least one elastic element urging the resistance temperature detector may comprise a leaf spring, a helical spring and/or a silicone pad. It may at least partially be made of metal and/or of plastic. Analogously, at least one elastic element urging the electric contact elements in the second direction may (respectively) comprise a leaf spring, a helical spring and/or a silicone pad, and/or may be least partially made of metal and/or of plastic.

The carrier may preferably be at least partially made of a polymer, in particular of a polymer synthetic plastic. It may be configured as a retainer holding some or all of the at least one bimetal safety switch, the wiring, the contact elements, and/or the resistance temperature detector. In particular, it may form a groove in which at least a respective portion of some or all of said components may be arranged.

According to advantageous embodiments, the carrier is ring-shaped with a hole in its centre. In respective embodiments of the kitchen appliance, such hole may serve as a through hole for a shaft drivable by an electric motor in a socle component of the kitchen appliance and configured to rotate a respective tool for treating food within a food reception space of the kitchen appliance bowl; for instance, such tool may be a rotatable knife or an agitator.

Further to the pins being framed by the carrier moulded around them, the electric contact elements, the at least one bimetal safety switch, the wiring and/or the resistance temperature detector are preferably fastened to the carrier directly or indirectly (i.e., with some part in-between). The respective elements may thus be pre-assembled on the carrier. In particular, the contact unit may be arranged as an assembly which can be handled as a whole. Thereby, the production of a kitchen appliance bowl can be further simplified.

The pin section, around which the carrier is moulded, preferably has a surface profile forming at least one protrusion and/or at least one notch, respectively in a direction orthogonal to said first direction, wherein the moulded carrier engages with the at least one protrusion/ notch. Thereby, a firm connection of the pin with the carrier can be achieved.

Additionally or alternatively, the carrier is preferably moulded hermetically around the respective section of each pin. That is, a contact of the pins with the carrier is preferably sealed. Thereby, humidity passing along the pins through the carrier and towards the electric components can be inhibited. In particular, the carrier may be shrink-fitted to the respective section of the respective pin.

According to advantageous embodiments, the contact unit even comprises two or more bimetal safety switches. Thereby, different positions can be taken into account for preventing an impending overheating. The wiring may then preferably connect the two or more bimetal safety switches in series. In this manner, a safety provided by said bimetal switches is further improved.

The at least one bimetal safety switch is preferably arranged in a peripheral region of the carrier. For instance, in case of the carrier being ring-shaped as mentioned above, a distance of a centre thereof to the at least one bimetal safety switch may be at least a half or at least three quarters of a radius of an outer circumference of the carrier. Thereby, an exterior region particularly prone to overheating can be controlled.

According to advantageous embodiments, the one or more elastic elements include at least one elastic element urging the at least one bimetal safety switch in the second direction. Thereby, when the contact unit is integrated into a kitchen appliance bowl and properly combined therein with a thick film heater, a reliable and firm contact of the at least one bimetal safety switch to the thick film heater can be achieved in an easy manner. Thus, safety of the kitchen appliance is improved and the production thereof is simplified.

In such embodiments, the at least one bimetal safety switch may preferably be configured to be pressed, by the respective at least one elastic element, against a first surface being at a different level than a second surface the contact elements and the resistance temperature detector are respectively configured to be pressed against by the one or more (possibly respectively dedicated) elastic element/s. For instance, the first surface may form part of a first plane, and the second surface may form part of a second plane different from the first plane (but possibly parallel thereto).

In particular, in an unloaded state of the one or more elastic element/s of the contact unit, the electric contact elements and the resistance temperature detector may protrude from the carrier further in the second direction than the at least one bimetal safety switch does. In this manner, the contact unit may be adapted to be combined with a thick film heater (such as a thick film heater according to an embodiment of the present invention as detailed below) having various layers, wherein the contact elements and the resistance temperature detector are pressed, by the one or more elastic elements, against another layer than the bimetal safety switch. Thereby, a high-performance kitchen appliance bowl is provided which is both precisely controllable and particularly safe.

For connection with a socle component of the kitchen machine, the resistance temperature detector may be wired to the above-mentioned pins of the plug, or the contact unit may comprise one or more further pin/s for insertion into respective socket/s, the resistance temperature detector being connected to the further pin/s. In the latter case, the carrier is preferably moulded also around a respective section of the further pin/s, and/or the further pin/s protrude/s from the carrier in the first direction.

A base component according to the present invention is a component of or for a kitchen appliance bowl comprising a thick film heater. The base component comprises a base bottom shell and a contact unit according to an embodiment the present invention. Therein, the carrier of the contact unit is combined to the base bottom shell such that the pins of the contact unit penetrate respective openings in the base bottom shell. Therein, the carrier may be mechanically fastened to the base bottom shell by means of at least one fastener. The base bottom shell may in particular be at least partially made of a metal. It may comprise an earthing pin configured to be inserted into an associated socket in a socle component of the kitchen appliance.

According to advantageous embodiments, the carrier is connected to the base bottom shell by at least one elastomer sealing surrounding the openings respectively penetrated by the pins. In particular, the elastomer sealing may comprise silicone. Advantageously, the sealing is a hermetical sealing. It may preferably be applied by a compression sealing process.

The bottom shell is preferably configured to be put on a designated surface of a socle component of the kitchen appliance, the socle component thus forming a seat for the kitchen appliance bowl. In particular, in a designated orientation of combination of the base component with such socle component of the kitchen appliance, the contact unit is preferably arranged on the base bottom shell.

In particular, the base bottom shell may have an annular shape. In this case, also the carrier of the contact unit preferable is ring-shaped as mentioned above. The base bottom shell then may preferably form an inner and an outer rim each projecting from a ground of the base bottom shell. In particular, the base bottom shell may advantageously constitute a channel which preferably at least partially or entirely accommodates the carrier or even the contact unit.

Analogous to what is mentioned above with respect to a ring-shaped carrier, in respective embodiments of the kitchen appliance, a centre hole of such annular base bottom shell (and of a contact unit combined therewith) may serve as a through hole for a shaft drivable by an electric motor in a socle component of the kitchen appliance and configured to rotate a respective tool for treating food within a food reception space of the kitchen appliance bowl; for instance, such tool may be a rotatable knife or an agitator.

The contact unit may preferably be fixed to the base bottom shell by means of one or more mechanical fastener/s, such as screw/s.

A thick film heater according to the present invention is configured to be integrated in a kitchen appliance bowl. It comprises a heat accumulator plate, a graphite foil, a polyimide foil (such as a poly-oxydiphenylene-pyromellitimide foil (a Kapton foil)), and a substrate with a plurality of connection pads for electric connection with contact elements of an electric circuit. Therein, the accumulator plate, the graphite foil, the polyimide foil and the substrate are arranged in layers in this ordering, wherein the polyimide foil, the graphite foil and the heat accumulator plate together form (at respective common positions) one, two or more clearance/s which are covered by respective regions of the substrate.

The clearances facilitate that respective elements may contact the substrate through or next to the accumulator plate. Thereby, the thick film heater with the heat accumulator plate integrated therein facilitates a particularly precise heat regulation.

In particular, a powering of the thick film heater can be achieved by means of a contact unit according to the present invention (when this is connected to a power source via a socle component of the kitchen appliance). Therein, the at least one elastic elements of the control unit may press the electric contact elements and the resistance temperature sensor through the first and the second clearance, respectively, against the substrate of the thick film heater, in particular against respective connection pads of the substrate.

The heat accumulator plate may preferably at least partially be of aluminium. According to advantageous embodiments, the substrate is at least partially made of stainless steel. It may provide at least a portion of a ground of the kitchen appliance bowl. The graphite foil and the polyimide foil serve as thermal insulating layers. Preferably, the layers of the thick film heater are mechanically connected to each other, such as by means of screws and nuts.

A kitchen appliance bowl according to the present invention comprises a base component according to an embodiment of the present invention, and a food receptacle component having a ground comprising a thick film heater according to an embodiment of the present invention. In particular, a wall of the food receptacle component may be integrally formed with the substrate of the thick film heater, or it may be welded thereto.

The base bottom shell of the base component is welded to the food receptacle component so as to form a closed chamber containing the carrier, the at least one bimetal safety switch, the wiring, the contact elements, and the resistance temperature detector of the contact unit comprised by the base component. Therein, the contact elements and the resistance temperature detector are pressed, by means of the one or more elastic element/s and at least partially within the at least one clearance, against the substrate of the thick film heater.

In particular, an outer rim of the base component shell may be welded to a wall of the food receptacle component, and/or an inner rim of the base component shell may be welded to the ground of the food receptacle component, in particular to the substrate of the thick film heater.

According to advantageous embodiments, the contact unit of the kitchen appliance bowl comprises at least one elastic element pressing the at least one bimetal safety against the heat accumulator plate. As a consequence, and further due to the position of the at least one bimetal safety switch and the resistance temperature detector respectively being pressed against the heat accumulator plate on the one hand and the substrate on the other hand, the kitchen appliance bowl according to the present invention facilitates advantageous control over local overheating, especially when food is put, within the food receptacle component, directly above the resistance temperature detector.

A kitchen appliance according to the present invention comprises a socle component and a kitchen appliance bowl according to an embodiment of the present invention. Therein, the socle component forms a seat for the kitchen appliance bowl, the seat having a plurality of sockets each configured to receive a respective one of the pins of the contact unit of the kitchen appliance bowl. Thereby, an electric connection of the thick film heater of the kitchen appliance bowl with an electric power source through the contact unit is facilitated.

The socle component may comprise a battery as such electric power source, and/or electrical connection means for connection with a remote electric power source.

The kitchen appliance thus provides a cooking function. In addition, it may provide at least one further function, such as a weighing, milling, cutting and/or beating function. To this end, the kitchen appliance may further comprise at least one tool rotatable within a food reception space of the kitchen appliance bowl, and an electric motor preferably comprised by the socle component and configured to drive the at least one tool. In particular, the kitchen appliance may preferably be a multi-purpose kitchen appliance.

The what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure.

Shown is schematically in
- Fig. 1:: an exemplary embodiment of a base component according to the present invention in perspective view from diagonally above;
- Fig. 2:: a detail of the base component of Figure 1 in a partially sectional view from diagonally below;
- Fig. 3:: a portion of a food receptacle component with a thick film heater according to an exemplary embodiment of the present invention in a partially sectional view;
- Fig. 4:: a portion of a kitchen appliance bowl according to an exemplary embodiment of the present invention in a perspective view from diagonally below;
- Fig. 5.: a first insight into a portion of a kitchen appliance bowl according to an exemplary embodiment of the present invention;
- Fig. 6:: a second insight into said portion of a kitchen appliance bowl according to an exemplary embodiment of the present invention;
- Fig. 7:: an insight into a further portion of a kitchen appliance bowl according to an exemplary embodiment of the present invention;

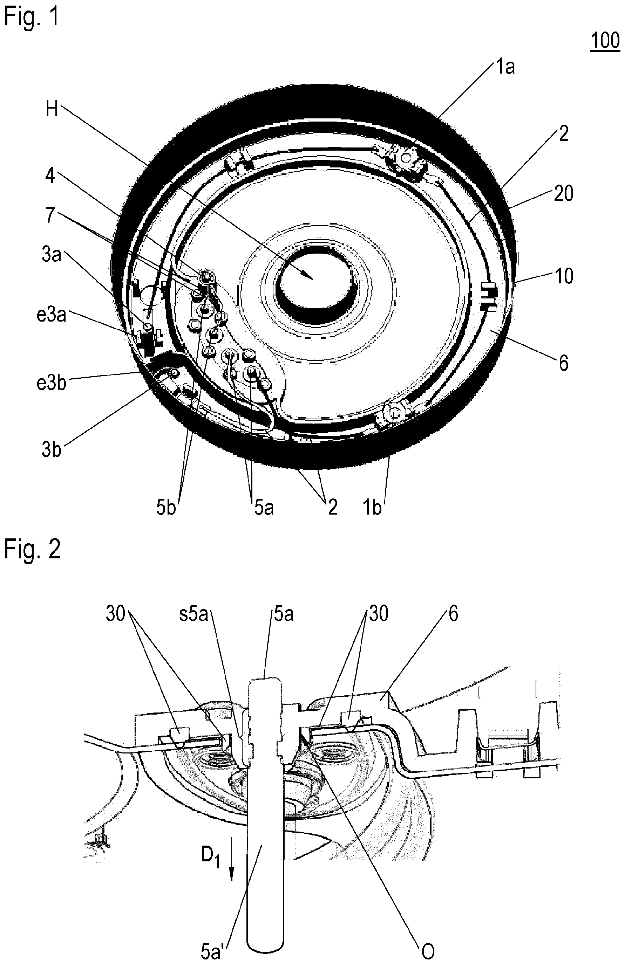

In Figure 1, a base component 100 according to an exemplary embodiment of the present invention is shown from diagonally above (with regard to a designated orientation of utilisation of the base component 100 when integrated in a kitchen appliance bowl). The base component 100 comprises an annular base bottom shell 20 surrounding a centre hole H and forming a channel accommodating a contact unit 10 according to an exemplary embodiment of the present invention.

The contact unit 10 comprises a ring-shaped carrier 6 carrying two bimetal safety switches 1a, 1b via respective elastic elements (not visible in Figure 1) connected to the bimetal safety switches 1a, 1b, two contact elements 3a, 3b via respective elastic elements e3a, e3b each supporting one of the contact elements 3a, 3b, and a resistance temperature sensor 4 via an elastic element e4 holding the resistance temperature sensor 4. The contact unit 10 further comprises a plug with two pins 5a, and a wiring 2 further carried by the carrier 6 and connecting the bimetal safety switches 1a, 1b in series with the electric contact elements 3a, 3b and the pins 5a.

As can be taken from Figure 2, the carrier 6 is moulded around sections s5a of the pins 5a. The stability of the moulding is improved by the sections s5a having a surface profile forming a plurality of protrusions and notches in radial direction with respect to a longitudinal axis of the respective pins 5a.

Moreover, first ends 5a' of the pins 5a protrude from the carrier 6 in a first direction D₁. Thereby, the pins 5a penetrate respective openings O in the base bottom shell 20. A sealing 30 (preferably made of an elastomer) surrounds the openings and connects the base bottom shell 20 (preferably hermetically) with the contact unit 10, in particular with the carrier 6 thereof. Thereby, humidity, in particular water is safely prevented to pass to the electric components of the contact unit 10 through the openings O.

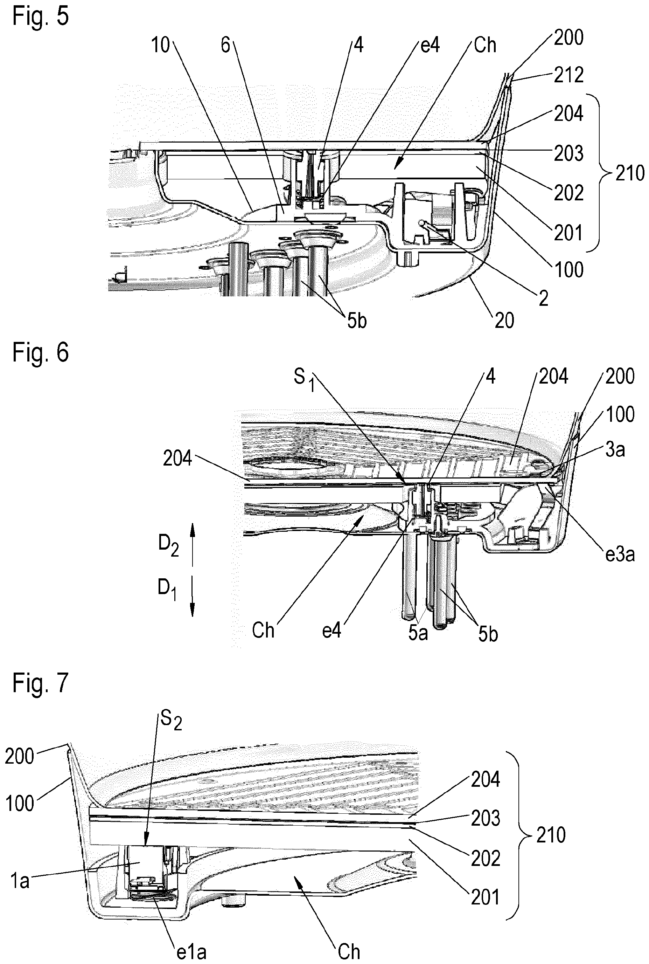

As further depicted in Figure 1, the contact elements 3a, 3b each are arranged on the respective elastic element e3a, e3b which in the present case are respective metal leaf springs forming part of the wiring 2. As can be taken from Figure 6 (showing the elastic element e3a in more detail), the elastic elements e3a, e3b urge the contact elements 3a, 3b in a second direction D₂ opposite to the first direction D₁. Moreover, the elastic element e4 (which in the present case is configured as a helical spring) urges the resistance temperature detector 4 likewise in the second direction D₂.

As a consequence, when the contact unit 10 is properly combined with a thick film heater, in particular when both the base component 100 and the thick film heater form part of a common kitchen appliance bowl, the contact elements 3a, 3b and the resistance temperature detector 4 may be pressed against respective connection pads of a substrate of the thick film heater (not shown in Figure 1). When the first ends of the pins 5a are inserted in a socket provided in a socle component providing a seat for the kitchen appliance bowl, the thick film heater may thus be powered via the contact unit 10, and a temperature of the respective region of the substrate may be detected (likewise not shown in Figure 1).

The resistance temperature detector 4 is connected, by means of wires 7, with respective further pins 5b. As again is seen in Figure 6, the further pins 5b likewise protrude from the carrier 6 in the first direction and penetrate the base bottom shell. Thereby, the resistance temperature detector 4 can be connected to the socle component which thus can gather the respectively detected temperature (not shown in the figures).

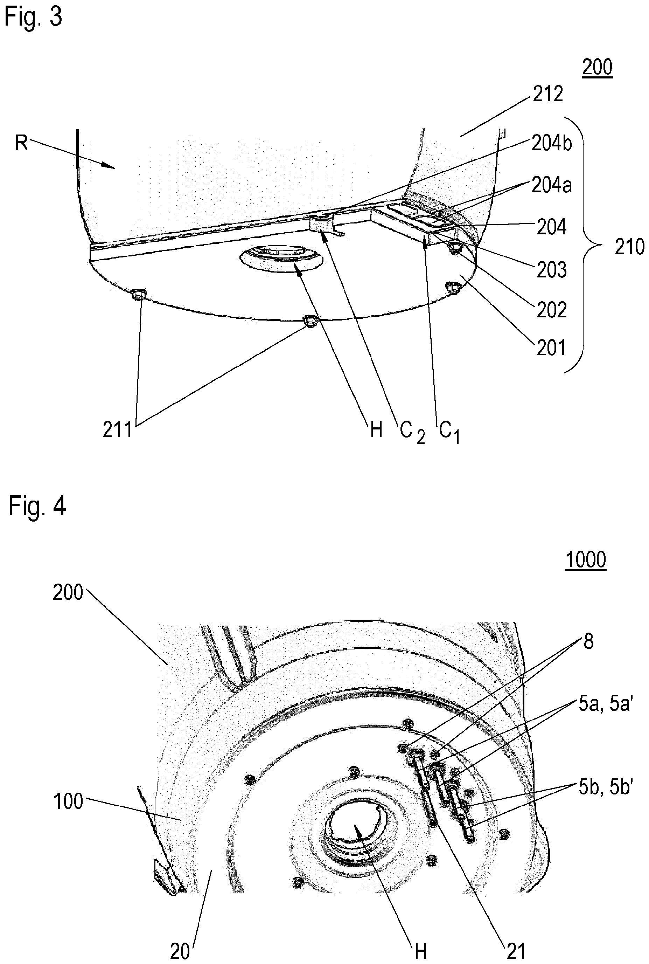

In Figure 3, a portion of a food receptacle component 200 of a kitchen appliance bowl according to an embodiment of the present invention is shown in a partial sectional view. A ground of the food receptacle component 200 comprises a thick film heater 210 according to an embodiment of the present invention. The thick film heater 210 comprises a heat accumulator plate 201, a graphite foil 202, a polyimide foil 203, and a substrate 204, which are layered in this ordering on each other and which are mechanically connected together by screws and nuts 211. The substrate 204 is preferably welded to the wall 212 of the food receptacle component 200 and comprises connection pads 204a for electric connection with contact elements of an electric circuit, in particular for connection with contact elements 3a, 3b of a contact unit 10 shown in Figure 1.

The substrate 204 further comprises a connection pad 204b for connection with a resistance temperature detector, in particular for connection with a resistance temperature detector 4 of a contact unit 10 shown in Figure 1.

The connection pads 204a, 204b are arranged in respective regions of the substrate covering respective clearances C₁, C₂ formed by the heat accumulator plate 201, the graphite foil 202, and the polyimide foil 203 at respective common positions. As a consequence, the connection pads can be contacted, through or next to the accumulator plate, by respective elements such as electric contact elements and/or a resistance temperature detector.

A hole H in the thick film heater 210 facilitates - in combination with an appropriate base component likewise having such hole - that a tool of the kitchen appliance and mounted on a socle component can be inserted through the hole H into a food reception space R of the food receptacle component 200, in order to treat a respective food.

In Figure 4, a portion of a kitchen appliance bowl 1000 is depicted from diagonally below. The kitchen appliance bowl 1000 comprises a base component 100 according to an embodiment of the present invention, and a food receptacle component 200 welded to the base component 100. As can be seen from Figure 4, respective first ends 5a', 5b' of the pins 5a, 5b and further an earthing pin 21 protrude from the base bottom shell 20, so as to be inserted into respective sockets in a socle component providing a seat for the kitchen appliance bowl 1000.

Moreover, further to the sealing 30 described above, also fasteners 8 serve to connect the base bottom shell 20 with the contact unit 10 (not visible in Figure 4).

Figure 5 provides a sectional view of a kitchen appliance bowl 1000 with its various components detailed above. As can be further taken from Figure 5, a closed chamber Ch is formed between the food receptacle component 200 and the base component 100, the chamber Ch containing the contact unit 10 with its electric components. Welds connecting the base bottom shell 20 to the substrate 204 of the thick film heater 210 and to a wall 212 of the food receptacle component 200, as well as the sealing 30 and the carrier 6 being moulded around the pins (as described above with respect to Figure 2) ensure that water is inhibited to enter the chamber Ch and, therewith, that the electric components of the contact unit are protected against water. As a consequence, the kitchen appliance bowl 1000 can be easily cleaned.

Figures 6 and 7 each provide a respective insight in the chamber Ch. In Figure 6, the resistance temperature sensor 4 is seen to be pressed, by the elastic element e4, against a first surface S₁ of the thick film heater, which surface S₁ is a surface of the substrate 204. In Figure 7, the bimetal safety switch 1a is seen to be pressed, by the elastic element e1a, against another surface S₂ of the thick film heater, which surface S₂ is a surface of the accumulator plate 201. Accordingly, the surface S₂ has a level different from the surface S₁; in particular, both surfaces S₁, S₂ form part of respective planes which are parallel to each other, but different.

Disclosed is a contact unit 10 for integration into a kitchen appliance bowl 100 with a thick film heater 20. The contact unit comprises an electric plug formed by two pins 5a, and a carrier 6 carrying at least one bimetal safety switch 1a, 1b, a wiring 2, electric contact elements 3a, 3b, a resistance temperature detector 4 and/or one or more elastic element/s e1a, e3a, e3b, e4. The carrier 6 is moulded around a respective section s5a of each pin 5a. Therein, a respective first end 5a' of each pin 5a protrudes from the carrier 6 in a first direction D₁, whereas at least the contact elements 3a, 3b and the resistance temperature detector 4 each are urged, by one or more elastic elements e3a, e3b, e4, in a second direction D₂ opposite to the first direction D₁.

Further disclosed are a base component 100 of a kitchen appliance bowl, a thick film heater 210, a kitchen appliance bowl 1000 and a kitchen appliance.

### Reference signs

- 1a, 1b: bimetal safety switch
- e1a: elastic element
- 2: wiring
- 3a, 3b: contact element
- e3a, e3b: elastic element
- 4: resistance temperature detector
- e4: elastic element
- 5a, 5b: pin
- 5a', 5b': first end of pin
- s5a: section of pin
- 6: carrier
- 7: wire
- 8: fastener

- 10: contact unit

- 20: base bottom shell
- 21: earthing pin
- 30: sealing

- 100: base component
- 200: food receptacle component

- 201: heat accumulator plate
- 202: graphite foil
- 203: polyimide foil
- 204: substrate
- 204a: connection pad
- 204b: regulation spot
- 210: thick film heater
- 211: nut
- 212: wall of food receptacle component

- C₁, C₂: clearance
- Ch: chamber
- D₁: first direction
- D₂: second direction
- H: centre hole
- R: food reception space

- S1: surface
- S2: surface

## Claims

1. Contact unit (10) for integration into a kitchen appliance bowl (100) with a thick film heater (210), the contact unit comprising
- an electric plug with two pins (5a) configured to be inserted in a respective socket for connection with an electric power source;
- two electric contact elements (3a, 3b) for connection with respective contacts of the thick film heater;
- at least one bimetal safety switch (1a, 1b);
- a wiring (2) connecting the at least one bimetal safety switch (1a, 1b) with the electric contact elements and the pins (5a);
- a resistance temperature detector (4);
- one or more elastic element/s (e1a, e3a, e3b, e4); and
- a carrier (6) carrying the at least one bimetal safety switch (1a, 1b), the wiring (2), the electric contact elements (3a, 3b), the resistance temperature detector (4) and/or the one or more elastic element/s (e1a, e3a, e3b, e4),
wherein the carrier (6) is moulded around a respective section (s5a) of each pin (5a), and
a respective first end (5a') of each pin (5a) protrudes from the carrier (6) in a first direction (Di), whereas the contact elements (3a, 3b) and the resistance temperature detector (4) each are urged, by at least one of the one or more elastic element/s (e3a, e3b, e4), in a second direction (D₂) opposite to the first direction (D₁).

2. Contact unit according to claim 1, comprising two or more bimetal safety switches (1a, 1b) which are connected in series by the wiring (2).

3. Contact unit according to one of claims 1 or 2, wherein at least one (e1a) of the of the one of more elastic element/s urges the at least one bimetal safety switch (1a, 1b) in the second direction (D₂).

4. Contact unit according to one of the preceding claims, wherein in an unloaded state of the one or more elastic element/s (e1a, e3a, e3b, e4), the electric contact elements (3a, 3b) and the resistance temperature detector (4) protrude from the carrier (6) further in the second direction (D₂) than the at least one bimetal safety switch (1a, 1b) does.

5. Base component (100) of or for a kitchen appliance bowl (1000) comprising a thick film heater, the base component comprising a base bottom shell (20) and a contact unit (10) according to one of the preceding claims, wherein the carrier (6) of the contact unit (10) is combined to the base bottom shell (20) with the pins (5a, 5b) of the contact unit (10) penetrating respective openings (O) in the base bottom shell (20).

6. Base component according to claim 5, wherein the carrier (6) is hermetically connected to the base bottom shell (20) by at least one elastomer sealing (30) surrounding the openings (O).

7. Thick film heater (210) for a kitchen appliance bowl (1000), the thick film heater comprising
- a heat accumulator plate (201),
- a graphite foil (202),
- a polyimide foil (203), and
- a substrate (204) with a plurality of connection pads (204a) for electric connection with contact elements of an electric circuit,
which are arranged in layers in this ordering, wherein the polyimide foil (203), the graphite foil (202) and the heat accumulator plate (201) together form at least one clearance (C₁, C₂) covered by a respective portion of the substrate (204).

8. Kitchen appliance bowl (1000) comprising a base component (100) according to one of claims 5 or 6, and a food receptacle component (200) having a ground comprising a thick film heater (210) according to claim 7, the base bottom shell (20) of the base component (100) being welded to the food receptacle component (200) so as to form a closed chamber (Ch) containing the carrier (6), the bimetal safety switches, the wiring (2), the contact elements (3a, 3b), the resistance temperature detector (4) and the one or more elastic element/s (e1a, e3a, e3b, e4),
wherein the contact elements (3a, 3b) and the resistance temperature detector (4) are pressed, by means of the one or more elastic elements (e3a, e3b, e4) and at least partially in the at least one clearance (C₁, C₂), against the substrate (204) of the thick film heater (210).

9. Kitchen appliance bowl according to claim 8, wherein the contact unit (109 is in accordance with claim 3, and the at least one bimetal safety switch (1a, 1b) is pressed, by the at least one elastic element (e1a), against the heat accumulator plate (201).

10. Kitchen appliance providing a cooking function, the kitchen appliance comprising a socle component and a kitchen appliance bowl (1000) according to one of claims 7 or 8, the socle component forming a seat for the kitchen appliance bowl (1000), the seat having a plurality of sockets each configured to receive a respective one of the pins (5a, 5b) of the contact unit (10) comprised by the kitchen appliance bowl (1000).
